## Europäisches Patentamt

## European Patent Office

## Office européen des brevets

(11) Veröffentlichungsnummer: **0 025 860**
**A1**

(12) # EUROPÄISCHE PATENTANMELDUNG

(21) Anmeldenummer: **80104840.6**

(22) Anmeldetag: **14.08.80**

(51) Int. Cl.³: **B 29 B 3/00**
**B 29 B 5/00**

(30) Priorität: **17.08.79 DE 2933433**

(43) Veröffentlichungstag der Anmeldung:
**01.04.81 Patentblatt 81/13**

(84) Benannte Vertragsstaaten:
**FR GB NL**

(71) Anmelder: **Weber, Heinz, Dipl.-Ing.**
**Knochgasse 10**
**D-8640 Kronach(DE)**

(72) Erfinder: **Weber, Heinz, Dipl.-Ing.**
**Knochgasse 10**
**D-8640 Kronach(DE)**

(74) Vertreter: **Patentanwälte Schaumburg, Schulz-Dörlam**
**& Thoenes**
**Mauerkircherstrasse 31**
**D-8000 München 80(DE)**

(54) **Beschickungsvorrichtung zum Vorwärmen und Zuführen von Kunststoffmaterial zu einer Kunststoffverarbeitungsmaschine.**

(57) Eine Beschickungsvorrichtung zum Vorwärmen und Zuführen von pulverförmigem oder körnigem thermoplastischem Kunststoffmaterial zu einer Kunststoffverarbeitungsmaschine weist einen Durchlaufbehälter (10) und eine Heizeinrichtung (34, 36) zur Erwärmung des durchlaufenden Kunststoffmaterials auf. Um den Durchlaufbehälter (10) einfach reinigen zu können und eine gleichmäßige Erwärmung des Kunststoffmaterials zu erreichen, umfaßt der Durchlaufbehälter (10) einen Außenmantel (12) und einen innerhalb des Außenmantels (12) unter Bildung eines mit der Einlaßöffnung (68) und der Auslaßöffnung (22) des Durchlaufbehälters (10) verbundenen Ringraumes (26) angeordneten Innenkörper (14), wobei das Kunststoffmaterial den Ringraum (26) unter der Wirkung der Schwerkraft durchläuft. Die Heizeinrichtung (34, 36) ist in dem Innenkörper (14) und/oder an der Außenseite des Außenmantels (12) angeordnet. Innenkörper (14) und Außenmantel (12) können relativ zueinander drehbar sein. Der Außenmantel (12) kann aufklappbar sein.

./...

EP 0 025 860 A1

FIG. 2

## Beschickungsvorrichtung zum Vorwärmen und Zuführen von Kunststoffmaterial zu einer Kunststoffverarbeitungsmaschine

Die Erfindung betrifft eine Beschickungsvorrichtung zum Vorwärmen und Zuführen von pulverförmigem oder körnigem thermoplastischem Kunststoffmaterial zu einer Kunststoffverarbeitungsmaschine, umfassend einen Durchlaufbehälter mit einer an einen Vorratsbehälter für das Kunststoffmaterial anschließbaren Einlaßöffnung und einer an die Kunststoffverarbeitungsmaschine anschließbaren Auslaßöffnung und eine Heizeinrichtung zum Erwärmen des durchlaufenden Kunststoffmaterials.

Ganz allgemein soll mit einer derartigen Vorrichtung dem Kunststoffmaterial bereits vor dem Eintritt in die Kunststoffverarbeitungsmaschine zumindest ein Teil jener Wärmemenge zugeführt werden, die für die Verarbeitung benötigt wird. Grundsätzlich kann natürlich die Wärme auch durch Beheizung der Kunststoffverarbeitungsmaschine selbst oder durch die in der Kunststoffverarbeitungsmaschine geleistete Knetarbeit aufgebracht werden, wenn es sich beispielsweise bei der Kunststoffverarbeitungsmaschine um eine Schneckenpresse handelt. Im ersten Fall ergibt sich die Schwierigkeit, genügend große Wärmeaustauschflächen bereitzustellen, die eine gleichmäßige Erwärmung des gesamten Kunststoffmaterials gewährleisten. Im zweiten Fall muß eine entsprechend hohe Antriebskraft in die Schnecke der Schneckenpresse eingeleitet werden, was insbesondere bei einer Doppelschneckenpresse zu einem erhöhten Konstruktionsaufwand führt. Daher verwendet man bevorzugt eigene Vorwärmvorrichtungen oder Beschickungsvorrichtungen zum Zuführen vorgewärmten Materials, die der Kunststoffverarbeitungsmaschine vorgeschaltet sind. Die Vorwärmung von Polyolefinen ist seit langem bekannt und bereitet keine besonderen Schwierigkeiten. Dagegen treten bei der Vorwärmung beispielsweise von PVC Probleme auf, da bei PVC die Gefahr örtlicher Überhitzung und damit die Gefahr einer Zersetzung mit Abspaltung von Salzsäure besteht.

Eine Vorrichtung der eingangs genannten Art ist beispielsweise aus der österreichischen Patentschrift 339 583 bekannt. Bei der bekannten Vorrichtung besteht der Durchlaufbehälter aus einer Reihe von fluchtend übereinander angeordneten Tellern, die jeweils versetzt gegeneinander einen Durchlaß im Boden aufweisen. Zu jedem Teller gehört ein Zellenrad, wobei die Zellenräder mittels einer die Tellerböden frei durchsetzenden Welle miteinander verbunden sind. An der Unterseite jedes Tellers ist eine Heizeinrichtung angeordnet. Das Kunststoffmaterial wird dem obersten Teller zugeführt und dann beim Umlauf der Zellenräder über die Telleroberseite geschoben, bis es durch den Durchlaß im Boden auf den nächsttiefer gelegenen Teller fällt, wo es von dem zugehörigen Zellenrad erfaßt wird. Vom untersten Teller aus wird der durchgemischte und erwärmte Kunststoff der Kunststoffverarbeitungsmaschine zugeführt.

Bei der bekannten Vorrichtung handelt es sich um eine relativ aufwendige Konstruktion, die nur mit einem erheblichen Zeitaufwand zu reinigen ist, wenn beispielsweise der Werkstoff und/oder dessen Farbe gewechselt werden soll.
Darüber hinaus sind im Durchlaufweg tote Winkel vorhanden,
in denen sich Kunststoffmaterial ansammeln kann. Durch
das Verharren im toten Winkel ist das Kunststoffmaterial
längere Zeit einer hohen Temperatur ausgesetzt, so daß
beispielsweise bei PVC die Gefahr besteht, daß es sich
nach einer gewissen Zeit zu zersetzen beginnt. Auch besteht die Gefahr, daß sehr feinkörniges Kunststoffmaterial
zwischen den Speichen der Zellenräder und dem Boden des
jeweiligen Tellers hindurchschlüpft, da die Zellenräder
nicht vollkommen fugenlos über die Tellerböden gleiten
können. Auch hier besteht die Gefahr, daß der Kunststoff
länger als vorgesehen auf den beheizten Tellerböden verweilt mit der daraus resultierenden Gefahr einer Zersetzung.

Der Erfindung liegt die Aufgabe zugrunde, eine Beschickungsvorrichtung der eingangs genannten Art anzugeben, die einfach im Aufbau sowie rasch und einfach zu reinigen ist
und dennoch eine gleichmäßige Erwärmung des durchlaufenden
Kunststoffmaterials auf eine gewünschte Temperatur gewährleistet.

Diese Aufgabe wird erfindungsgemäß dadurch gelöst, daß
der Durchlaufbehälter einen an seinem einen Ende mit einem
Auslauftrichter verbundenen Außenmantel und einen Innenkörper umfaßt, der innerhalb des Außenmantels unter Bildung eines mit der Einlaßöffnung und der Auslaßöffnung in
Verbindung stehenden Ringraumes zwischen Außenmantel und
Innenkörper angeordnet ist, wobei die Anordnung so getroffen ist, daß das Kunststoffmaterial den Ringraum unter
der Wirkung der Schwerkraft durchläuft, und daß die Heizeinrichtung in dem Innenkörper angeordnet ist und/oder sich
über den Außenumfang des Außenmantels erstreckt.

Durch die Ausbildung des Durchflußraumes als Ringraum erhält man für einen gegebenen Durchflußquerschnitt große wärmeabgebende Oberflächen. Bei einer geeigneten Wahl der Abmessungen von Außenmantel und Innenkörper läßt sich für einen gegebenen Durchflußquerschnitt der Abstand zwischen Außenmantel und Innenkörper hinreichend klein machen, um eine ausreichende Erwärmung des gesamten durchlaufenden Kunststoffmaterials zu erreichen.

Durch das Fehlen von toten Winkeln und horizontalen Rastflächen kann das durchlaufende Kunststoffmaterial nirgends länger verweilen als vorgesehen ist. Dadurch wird vermieden, daß sich das Material lokal über eine gewünschte Temperatur hinaus erwärmen und zersetzen kann.

Die erfindungsgemäße Beschickungsvorrichtung ist außerordentlich einfach und schnell zu reinigen. Hierzu braucht bei einem geschlossenen Außenmantel lediglich der Innenkörper aus dem Außenmantel herausgenommen zu werden, so daß die den Ringraum begrenzenden Flächen bequem zugänglich sind. Besonders einfach gestaltet sich die Reinigung jedoch dann, wenn der Außenmantel aus mindestens zwei längs einer Mantellinie lösbar miteinander verbundenen Schalen besteht. Vorzugsweise sind zwei Schalen vorgesehen, die um eine im wesentlich parallel zu einer Mantellinie verlaufende Achse schwenkbar angeordnet sind. In diesem Falle brauchen die beiden Schalen nur aufgeklappt zu werden, so daß der gesamte Innenkörper sowie die Innenwände der Schalen selbst freiliegen und bequem und rasch gereinigt werden können.

Die Form von Außenmantel und Innenkörper kann in weiten Grenzen variieren. So kann der Ringraum auf mindestens einer Seite von einer Fläche begrenzt sein, deren Querschnitt quer zur Durchlaufrichtung die Form eines Vielecks hat. Der Ringraum kann aber auch auf mindestens einer Seite von einer Fläche begrenzt sein, deren Querschnitt quer zur Durchlaufrichtung die Form einer kontinuierlich gekrümmten geschlossenen Kurve hat. Insbesondere können der Außenmantel und/oder der Innenkörper im wesentlichen zylindrisch ausgebildet sein.

Gemäß einer sehr einfachen Ausführungsform der erfindungsgemäßen Beschickungsvorrichtung ist der Innenkörper in dem Außenmantel koaxial zu diesem und unbeweglich angeordnet, wobei die Einlaßöffnung konzentrisch zur Ringraumachse liegt. Durch die mittige Anordnung der Einlaßöffnung wird eine gleichmäßige Verteilung des einströmenden Kunststoffmaterials auf den gesamten Ringraums erreicht.

Gemäß einer bevorzugten Ausführungsform der erfindungsgemäßen Beschickungsvorrichtung sind der Innenkörper und der Außenmantel relativ zueinander drehbar. Dadurch wird eine gewisse Durchmischung des durchlaufenden Kunststoffmaterials erreicht und der Wärmeübergang von den den Ringraum begrenzenden Flächen auf die Kunststoffteilchen vergleichmäßigt. Der Innenkörper kann dabei koaxial oder exzentrisch zum Außenmantel angeordnet sein. Die exzentrische Anordnung hat beispielsweise den Vorteil, daß die Breite des Ringraumes durch die Relativdrehung zwischen Außenmantel und Innenkörper ständig variiert und dadurch eine Verdrängung des Kunststoffmaterials in Umfangsrichtung stattfindet, die zu einer Umschichtung und Durchmischung des Materials führt.

Vorzugsweise ist der Innenkörper in dem an einer ortsfesten Halterung befestigten Außenmantel drehbar gelagert. Hierzu kann der Innenkörper an seinem oberen Ende einen axial verlaufenden Lagerfortsatz aufweisen, an dem eine Antriebseinrichtung für den Innenkörper angreift. Durch diese Art der Lagerung des Innenkörpers ist der Durchlaufweg für das Kunststoffmaterial völlig frei und durch keine Lagerstellen oder Antriebsmittel behindert.

Die Durchmischung des Kunststoffmaterials innerhalb des Ringraumes kann noch erheblich dadurch verbessert werden, daß zwischen dem Innenkörper und dem Außenmantel im wesentlichen koaxial zu diesem ein Rührflügel angeordnet ist, der eine Mehrzahl von in den Ringraum eingreifenden Flügelelementen aufweist. Dieser Rührflügel sorgt dafür, daß praktisch jedes Kunststoffteilchen auf seinem Weg durch den Ringraum einmal in unmittelbarer Nähe der den Ringraum begrenzenden Wände gelangt, um von diesen Wärme aufzunehmen. Umgekehrt wird vermieden, daß ein beliebiges Kunststoffteilchen auf seinem Weg durch den Ringraum allzu lange in der Nähe einer der wärmeabgebenden Flächen verbleibt. Der Rührflügel kann mit einem eigenen Antrieb versehen sein. Vorzugsweise ist er jedoch gegenüber dem Innenkörper und dem Außenmantel frei drehbar gelagert. Der Rührflügel stellt in diesem Falle bei der Relativbewegung zwischen Innenkörper und Außenmantel für das Kunststoffmaterial ein Hindernis dar, welches dafür sorgt, daß nicht nur die unmittelbar an den Außenmantel bzw. den Innenkörper angrenzen Materialschichten eine horizontale Bewegungskomponente erhalten, sondern daß auch durch eine von dem Rührflügel hervorgerufene Umschichtung eine Durchmischung des Kunststoffmaterials in einem mittleren Bereich zwischen dem Innenkörper und dem Außenmantel stattfinet. Es hat sich gezeigt, daß durch diese einfache Maßnahme eine außerordentlich gleichmäßige Erwärmung des durchlaufenden Kunststoffmaterials erreicht werden kann.

Die Flügelelemente sind beispielsweise an einem im wesentlichen koaxial zur Rohrachse angeordneten Trägerring angebracht, von dem aus sie sich im wesentlichen achsparallel mit Abstand von Außenmantel und Innenkörper durch den Ringraum erstrecken. Die Flügelelemente können eine unterschiedliche Form aufweisen. Gemäß einer bevorzugten Ausführungsform sind die Flügelelemente von Flachprofilen mit im wesentlichen rechteckförmigem Querschnitt gebildet, die mit ihrer Querschnittslängsseite im wesentlichen radial ausgerichtet sind.

Die Erwärmung des Kunststoffmaterials kann grundsätzlich durch Wärmeaustausch mit den den Ringraum begrenzenden Flächen oder aber auch durch eine Mikrowellenheizung erfolgen. Im ersteren Fall sollte die Heizvorrichtung so ausgebildet sein, daß eine möglichst gleichmäßige Beheizung der Wärmeaustauschflächen erzielt wird, ohne daß lokale Temperaturspitzen auftreten. Dabei kann die Heizvorrichtung jedoch auch mehrere Zonen umfassen, die getrennt voneinander steuerbar sind.

Erfindungsgemäß weist die Heizvorrichtung für den Außenmantel einen diesen umschließenden Heizmantel auf, in dem vorzugsweise elektrische Heizelemente angeordnet sind. Die Heizelemente sind vorzugsweise von im wesentlichen achsparallel verlaufenden, über den Umfang des Heizmantels verteilten Heizstäben gebildet. Eine gleichmäßige Erwärmung des Außenmantels kann dadurch gefördert werden, daß innerhalb des Heizmantels mindestens eine Vorrichtung zum Umwälzen der Luft, beispielsweise ein Ventilator, vorgesehen ist.

Auch die Heizvorrichtung für den Innenkörper umfaßt vorzugsweise elektrische Heizelemente, die innerhalb des hohlen Innenkörpers angeordnet sind. Die elektrische Beheizung der Wärmeaustauschflächen hat den Vorteil, daß die Energiezufuhr besonders einfach ist. Damit wird jedoch nicht die Möglichkeit ausgeschlossen, die Temperatur der Wärmeaustauschflächen auch durch ein durchströmendes Wärmeträgermedium zu beeinflussen.

Für den Fall, daß der Innenkörper drehbar angeordnet ist, wird vorgeschlagen, daß die Heizelemente an einem Träger angeordnet sind, der über ein axial durch den hohlen Lagerfortsatz des Innenkörpers hindurchgeführtes Verbindungselement mit der ortsfesten Halterung verbunden ist. Der Träger mit den Heizelementen bleibt also bei einer Drehung des Innenkörpers in Ruhe. Dadurch wird das Wärmeträgermedium innerhalb des Innenkörpers gleichmäßig aufgewärmt und vermieden, daß die den Heizelementen unmittelbar gegenüberliegenden Flächenabschnitte des Innenkörpers eine höhere Temperatur aufweisen, als die einen Zwischenraum zwischen den Heizelementen gegenüberliegenden Flächenabschnitte. Die Gleichmäßigkeit der Aufwärmung des Wärmeträgermediums innerhalb des Innenkörpers kann noch dadurch gesteigert werden, daß in dem Innenkörper ein Ventilator angeordnet ist. Der Ventilator ist vorzugsweise über eine in dem Lagerfortsatz drehbar gelagerte und aus diesem herausragende Antriebswelle antreibbar.

Die Wärmeaufnahme des Kunststoffmaterials wird natürlich auch durch die Verweilzeit des Kunststoffmaterials innerhalb des Ringraumes bestimmt. Diese Verweilzeit des Kunststoffmaterials sowie die der Kunststoffverarbeitungsmaschine zugeführte Materialmenge können mit Hilfe einer Dosiervorrichtung gesteuert werden, die in dem Auslaufstutzen des Auslauftrichters angeordnet ist. Eine solche Dosiervorrichtung kann beispielsweise von einem drehbar angeordneten Zellenrad gebildet sein.

Der Zulauf des Kunststoffmaterials zum Ringraum kann auf einfache Weise dadurch gesteuert werden, daß die Einlaß-

Öffnung des Ringraumes mit dem Vorratsbehälter über ein Zulaufrohr in Verbindung steht, dessen Auslaufende im wesentlichen horizontal umgebogen ist, tangential zum Ringraum verläuft und mit der Auslauföffnung in die der Materialdrehrichtung entgegengesetzte Richtung weist. Durch den sich vor der Auslauföffnung bildenden Materialstau wird der Ausfluß aus dem Zulaufrohr blockiert. Die Auslauföffnung wird erst wieder freigegeben, wenn der Materialspiegel entsprechend gesunken ist.

In der Regel wird man die den Ringraum begrenzenden Wände auf ihren zum Ringraum hinweisenden Seiten mit glatten Oberflächen ausführen. Bei mindestens einer der Wände kann jedoch die Oberfläche auch strukturiert sein, beispielsweise mit Rillen oder Noppen versehen sein, um ggf. eine noch bessere Durchmischung des durchlaufenden Kunststoffmaterials zu erreichen.

Weitere Merkmale und Vorteile der Erfindung ergeben sich aus der folgenden Beschreibung, welche in Verbindung mit den beiliegenden Figuren die Erfindung anhand von Ausführungsbeispielen erläutert. Es stellen dar:

Fig. 1 einen teilweise schematischen Axialschnitt durch eine erste Ausführungsform der erfindungsgemäßen Beschickungsvorrichtung mit einem relativ zum Außenmantel unbeweglich angeordneten Innenkörper,

Fig. 2 einen der Fig. 1 entsprechenden Schnitt durch eine zweite Ausführungsform der Erfindung mit relativ zum Außenmantel drehbar angeordnetem Innenkörper,

Fig. 3 einen Axialschnitt durch eine dritte Ausführungsform der Erfindung mit zwischen Innenkörper und Außenmantel angeordnetem Rührflügel,

Fig. 4 einen schematischen achsnormalen Querschnitt durch einen Umfangsabschnitt von Innenkörper, Rührflügel und Außenmantel längs Linie IV-IV in Fig. 3,

Fig. 5 einen halbschematischen achsparallelen Schnitt durch eine weitere Ausführungsform des den Außenmantel umgebenden Heizmantels,

Fig. 6 eine schematische Draufsicht auf eine weitere Ausführungsform des Außenmantels und

Fig. 7 eine schematische Darstellung der Zuführung des Kunststoffmaterials zum Ringraum gemäß einer weiteren Ausführungsform der Erfindung.

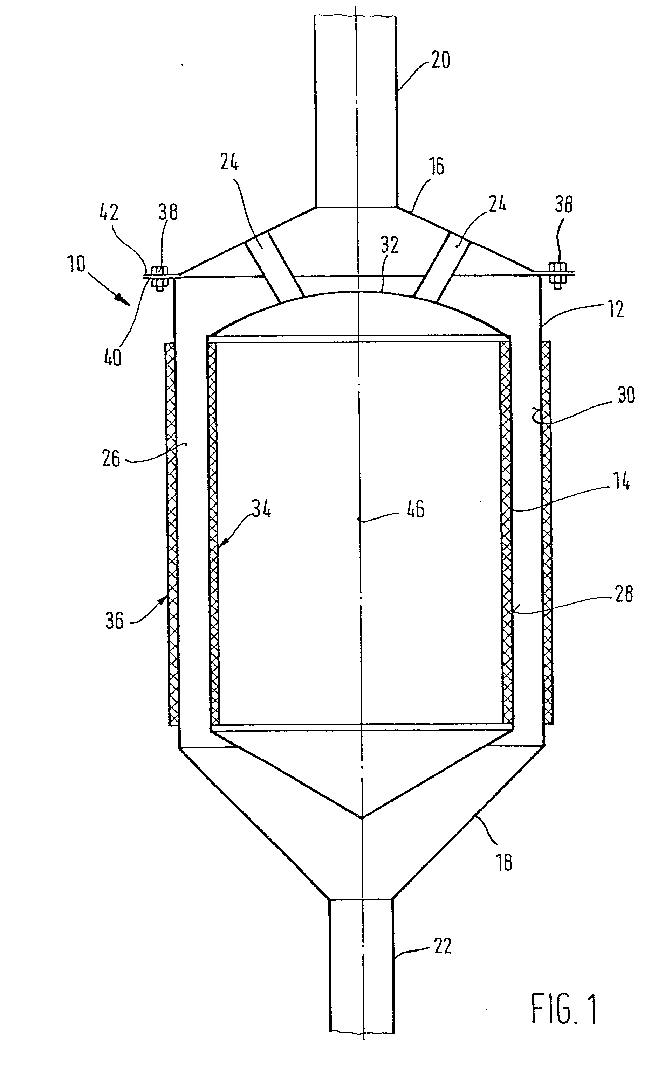

Die in Fig. 1 dargestellte Beschickungsvorrichtung umfaßt einen allgemein mit 10 bezeichneten Durchlaufbehälter mit einem im wesentlichen zylindrischen Außenmantel 12 und einem koaxial zum Außenmantel 12 innerhalb desselben angeordneten, im wesentlichen zylindrischen Innenkörper 14. Der Außenmantel 12 ist an seinem oberen Ende mit einem Einlauftrichter 16 und an seinem unteren Ende mit einem Auslauftrichter 18 verbunden. Der Einlauftrichter 16 ist über einen Einlaufstutzen 20 an einen nicht dargestellten Vorratsbehälter für pulverförmiges oder körniges Kunststoffmaterial anschließbar. Der Auslauftrichter 18 ist über einen Auslaufstutzen 22 an eine nicht dargestellte Kunststoffverarbeitungsmaschine, beispielsweise eine Doppelschneckenpresse, anschließbar.

Der Innenkörper 14 ist über Streben oder Speichen 24 an dem Einlauftrichter 16 unbeweglich aufgehängt. Der Durchmesser des Innenkörpers ist so gewählt, daß ein Ringraum 26 zwischen der Außenumfangsfläche 28 des Innenkörpers 14 und der Innenumfangsfläche 30 des Außenmantels 12 gebildet wird. An seinem oberen Ende ist der Innenkörper mit einer kugelschalenförmigen Abdeckung 32 versehen, während das untere Ende des Innenkörpers 14 sich unterhalb der zylindrischen Außenumfangsfläche 28 konisch zum Auslaufstutzen 22 hin verjüngt.

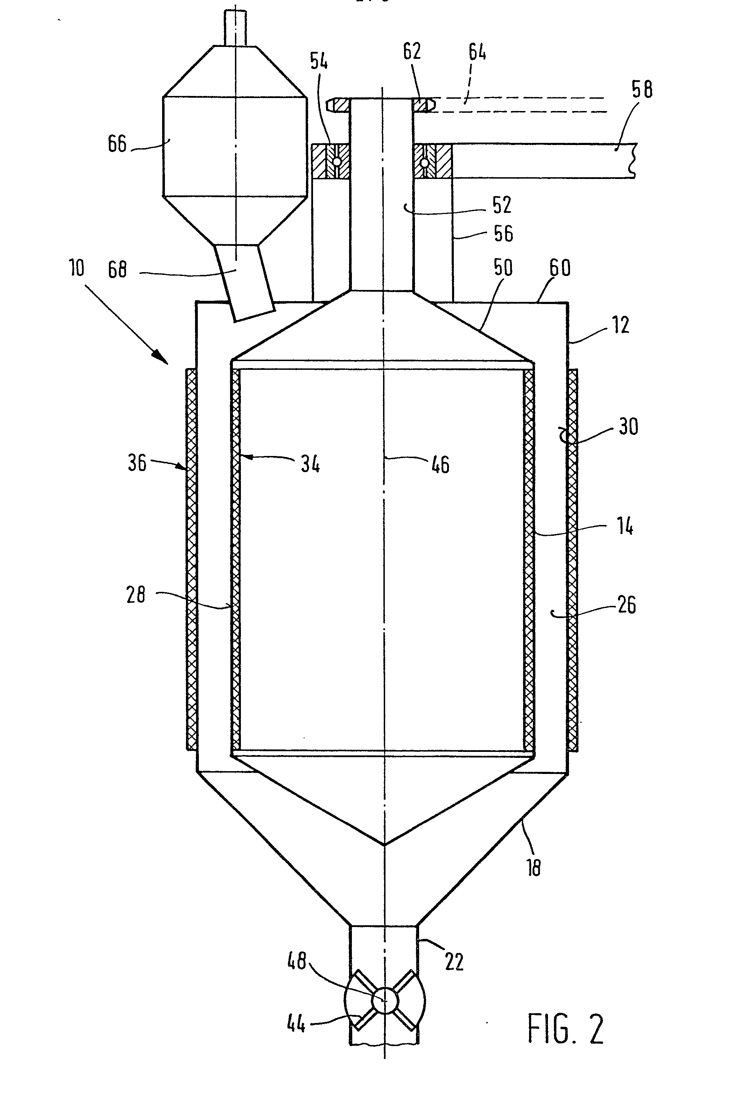

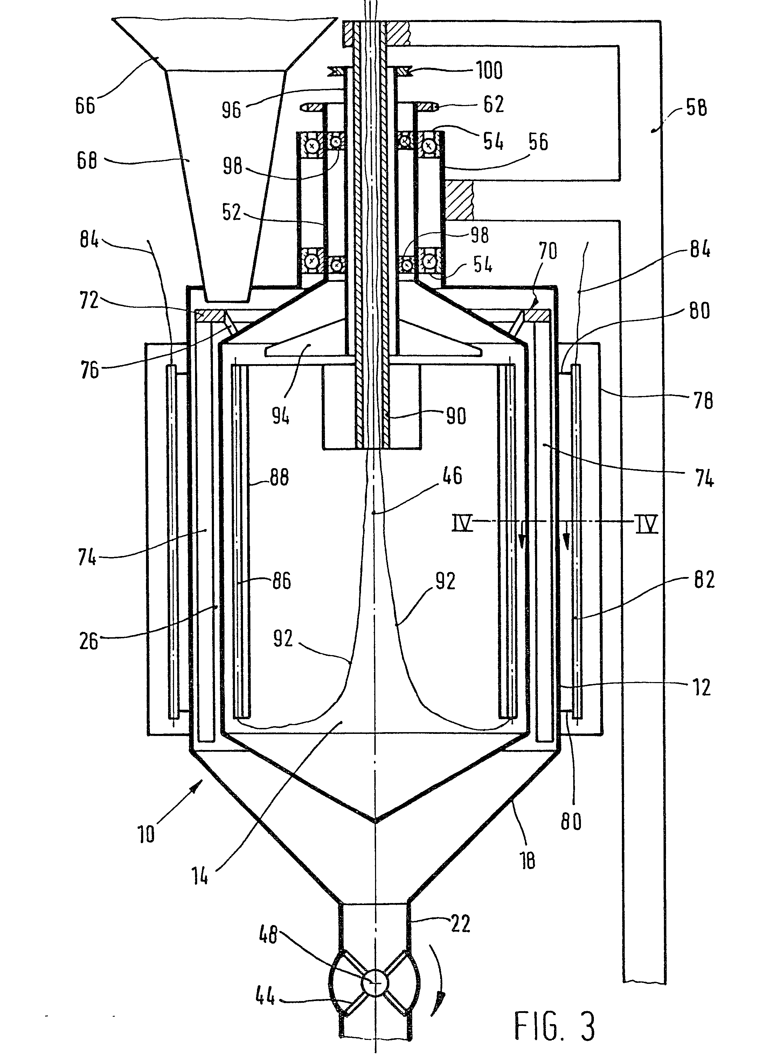

Die zylindrische Wand des Innenkörpers 14 und der Außenmantel 12 sind jeweils durch eine Heizvorrichtung 34 bzw. 36 beheizbar, die in den Fig. 1 und 2 nur schematisch als Heizmantel angedeutet sind. Die Heizvorrichtungen 34 und 36 werden anhand der Fig. 3 noch näher beschrieben.

Im Betrieb wird das pulverförmige oder körnige thermoplastische Kunststoffmaterial dem Durchlaufbehälter 10 durch den Einlaufstutzen 20 zugeführt. Durch die koaxiale Anordnung des Einlaufstutzens 20 und die kugelschalenförmige Abdeckung 32 wird das einlaufende Kunststoffmaterial gleichförmig auf den Ringraum 26 verteilt, durch den es kontinuierlich hindurchströmt, um den Durchlaufbehälter 10 durch den Auslaufstutzen 22 wieder zu verlassen. Beim Durchlauf durch den Ringraum 26 wird das Kunststoffmaterial durch Berührung mit der beheizten Außenumfangsfläche 28 des Innenkörpers 14 bzw. der beheizten Innenumfangsfläche des Außenmantels 12 erwärmt. Wie man erkennt, weist die Anordnung keinerlei Raststellen auf, an denen sich das Kunststoffmaterial absetzen könnte. Somit besteht auch keine Gefahr, daß das Kunststoffmaterial lokal zu stark erwärmt wird und sich dadurch zersetzt oder die Beschickungsvorrichtung verunreinigt. Die Vorrichtung kann auf sehr einfache Weise gereinigt werden, indem man den Innenkörper 14 aus dem Außenmantel 12 herausnimmt. Hierzu genügt es beispielsweise schematisch angedeutete Befestigungsschrauben 38 zu lösen, die mit dem Außenmantel 12 bzw. dem Einlauftrichter 16 verbundene Flansche 40 bzw. 42 miteinander verbinden. Die Art der Verbindung zwischen dem Einlauftrichter 16 und dem Außenmantel 12 ist an sich nicht kritisch, da keine besonderen Kräfte auf diese Verbindungsstelle einwirken.

Bei der in Fig. 2 dargestellten Ausführungsform sind die mit der Ausführungsform gemäß Fig. 1 übereinstimmenden Teile mit denselben Bezugszeichen versehen und werden daher nicht nochmal beschrieben.

Im Auslaufstutzen 22 ist bei der Ausführungsform gemäß Fig. 2 ein Zellenrad 44 angeordnet, das um eine zur Rohrachse 46 des Durchlaufbehälters 10 senkrechte Drehachse 48 drehbar gelagert ist und zur Steuerung der Durchflußgeschwindigkeit des Kunststoffmaterials durch den Ringraum 26 sowie zur Dosierung des der Kunststoffverarbeitungsmaschine zugeführten Kunststoffmaterials dient.

Das obere Ende des Innenkörpers 14 ist über eine Kegelstumpffläche 50 mit einem koaxial zur Rohrachse 46 angeordneten zylindrischen Lagerfortsatz 52 verbunden, mit Hilfe dessen der Innenkörper 40 über ein Kugellager 54 in einem mit dem Außenmantel 12 verbundenen axialen Rohrstutzen 56 drehbar gelagert ist. Der Rohrstutzen 56 seinerseits ist an einem ortsfesten oder mit der Kunststoffverarbeitungsmaschine starr verbundenen Halterungsgestell befestigt. Der Rohrstutzen 56 ist ferner mit einer flachen Abdeckung 60 verbunden, die den Außenmantel 12 an seinem oberen Ende verschließt. Die Abdeckung 60 kann beispielsweise ebenfalls über Flansche und Schraubverbindungen mit dem Außenmantel 12 verbunden sein.

An seinem oberen Ende trägt der Lagerfortsatz 52 ein Kettenzahnrad 62, mit dessen Hilfe der Innenkörper 14 über eine gestrichelt angedeutete Antriebskette 64 von einer nicht dargestellten Antriebseinrichtung her in Drehung versetzt werden kann. Selbstverständlich wäre es auch möglich, einen Antriebsmotor direkt oder über ein Getriebe an dem Innenkörper 14 angreifen zu lassen.

Das Kunststoffmaterial wird dem Durchlaufbehälter 10 von einem Vorratsbehälter 66 her zugeführt, der mit einem Einfüllstutzen 68 durch die Abdeckung 60 in den Durchlaufbehälter 10 hineinragt. Der Einfüllstutzen 68 ist dabei so gerichtet, daß das einlaufende Kunststoffmaterial auf die Kegelstumpffläche 50 des sich drehenden Innenkörpers 14 fällt, so daß das einlaufende Kunststoffmaterial von dem sich drehenden Innenkörper 14 mitgenommen und auf den gesamten Ringraum 26 verteilt wird. Durch die Drehung des Innenkörpers 14 gegenüber dem ruhenden Außenmantel 12 erhält das Kunststoffmaterial neben der von der Schwerkraft bewirkten vertikalen Bewegungskomponente auch eine horizontale Bewegungskomponente, so daß eine Durchmischung des Kunststoffmaterials innerhalb des Ringraumes stattfindet. Dies verbessert die Verteilung der Wärme innerhalb des durchlaufenden Kunststoffmaterials und verringert noch weiter die ohnehin geringe Wahrscheinlichkeit, daß sich Kunststoffmaterial an den beheizten Vorwärmflächen ansetzt.

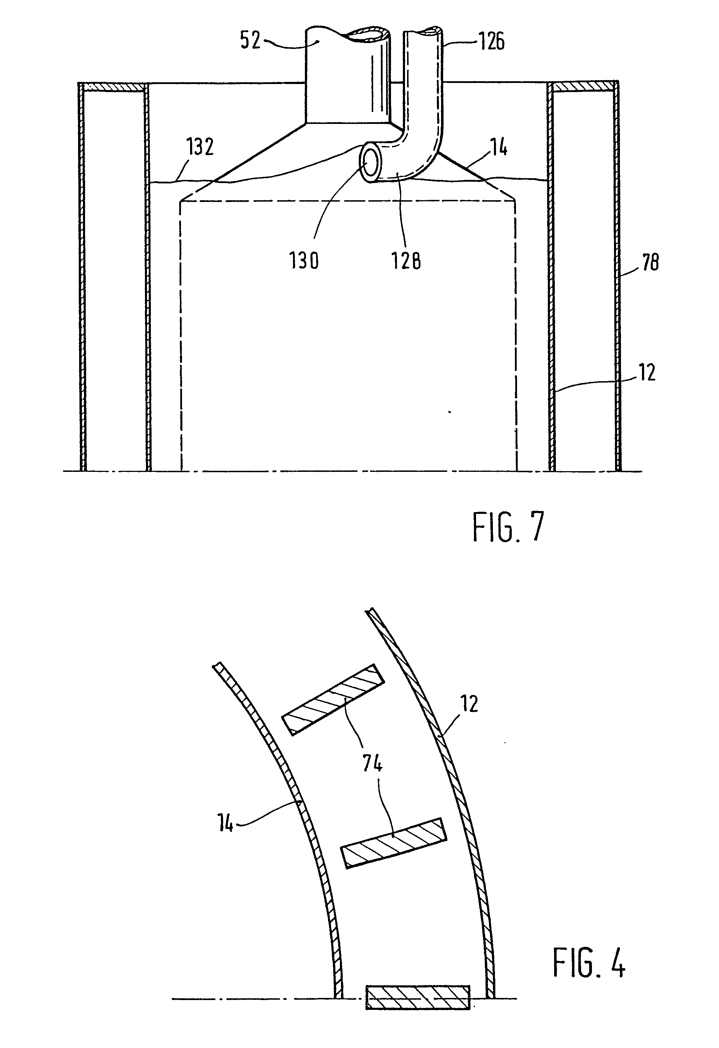

Bei der Ausführungsform gemäß Fig. 3 sind nun die Heizvorrichtungen 34 und 36 detaillierter dargestellt. Darüber hinaus unterscheidet sich die Ausführungsform gemäß Fig. 3 von den bisher beschriebenen Ausführungsformen vor allem dadurch, daß zwischen dem Innenkörper 14 und dem Außenmantel 12 ein Rührflügel 70 angeordnet ist. Der Rührflügel 70 umfaßt einen in einer achsnormalen Ebene liegenden Ringträger 72, an dem achsparallel verlaufende Flügelelemente 74 gleichmäßig über den Umfang verteilt angeordnet sind. Die Flügelelemente 74 bestehen aus Flachprofilen mit rechteckigem Querschnitt (vgl. Fig. 4), die so angeordnet sind, daß ihre Querschnittslängsseiten radial verlaufen. Dabei sind die Querschnittsabmessungen der Flügelelemente 74 so gewählt, daß die Flügelelemente 74 jeweils einen Abstand von der Außenumfangsfläche 28 des Innenkörpers 14 bzw. der Innenumfangsfläche 30 des Außenmantels 12 haben (siehe Fig. 4). Der Trägerring 72 kann an dem Innenkörper 14 befestigt sein oder ist mit Hilfe von Gleitfortsätzen 76, die an dem Trägerring 72 ausgebildet sind, auf der Kegelstumpffläche 50 des Innenkörpers 14 frei drehbar gelagert. Bei einer Drehung des Innenkörpers 14 innerhalb des Außenmantels 12 wird dann der Rührflügel 70 mitgeschleppt, jedoch mit einer Geschwindigkeit, die langsamer ist als die Geschwindigkeit des Innenkörpers 14. Die Flügelelemente sorgen dabei für eine Durchmischung des innerhalb des Ringraums 26 befindlichen Kunststoffmaterials, so daß eine wirksame und gleichmäßige Übertragung der Wärme an das gesamte durchlaufende Kunststoffmaterial erfolgt.

Die Flügelelemente 74 können auch andere Querschnittsformen besitzen. So sind beispielsweise auch halbkreisförmige oder S-förmige Querschnittsprofile denkbar. Wie sich überraschenderweise gezeigt hat, erreicht man mit dem erfindungsgemäß vorgesehenen Rührflügel eine besonders gute Durchmischung und Erwärmung des gesamten Kunststoffmaterials, obwohl der Rührflügel 70 nicht eigens angetrieben wird.

Die Heizvorrichtung 36 für den Außenmantel 12 umfaßt einen den Außenmantel 12 ringförmig umgebenden abgeschlossenen hohlen Heizmantel 78, in dem an entsprechenden Halterungen 80 achsparallel verlaufende stromdurchflossene Heizstäbe 82 angeordnet sind. Die Stromzufuhr zu den Heizstäben 82 erfolgt über Leitungen 84, die mit einer nicht dargestellten Spannungsquelle verbunden sind.

Die Heizvorrichtung 34 für den Innenkörper 14 umfaßt elektrische Heizstäbe 86, die achsparallel verlaufen und mit einem geeigneten Abstand von der Innenumfangsfläche des Innenkörpers 14 in gleichmäßigen Abständen voneinander auf einem Trägerrahmen 88 angeordnet sind. Der Trägerrahmen 88 ist über ein koaxial zum Lagerfortsatz 52 des Innenkörpers 14 durch den Lagerfortsatz 52 hindurch verlaufendes Trägerrohr 90 an dem Halterungsgestell 58 befestigt. Durch das hohle Trägerrohr 90 verlaufen die Anschlußleitungen 92 für die Heizstäbe 86. Während der Drehung des Innenkörpers 14 bleibt der Trägerrahmen 88 mit den Heizstäben 86 in Ruhe. Dies hat den Vorteil, daß die Innenumfangswand des Innenkörpers 14 vollkommen gleichförmig erwärmt wird. Die Gleichförmigkeit der Erwärmung des Innenkörpers 14 kann noch durch einen Ventilator 94 verbessert werden, der am unteren Ende einer das Trägerrohr 90 umgebenden Hohlwelle 96 angeordnet ist. Die Hohlwelle 96 ist über Kugellager 98 in dem Lagerfortsatz 52 des Innenkörpers 14 drehbar gelagert. An ihrem oberen, aus dem Lagerfortsatz 52 herausragenden Ende trägt die Hohlwelle 96 eine Riemenscheibe 100, die über einen nicht dargestellten Treibriemen von einer ebenfalls nicht dargestellten Antriebseinrichtung her antreibbar ist.

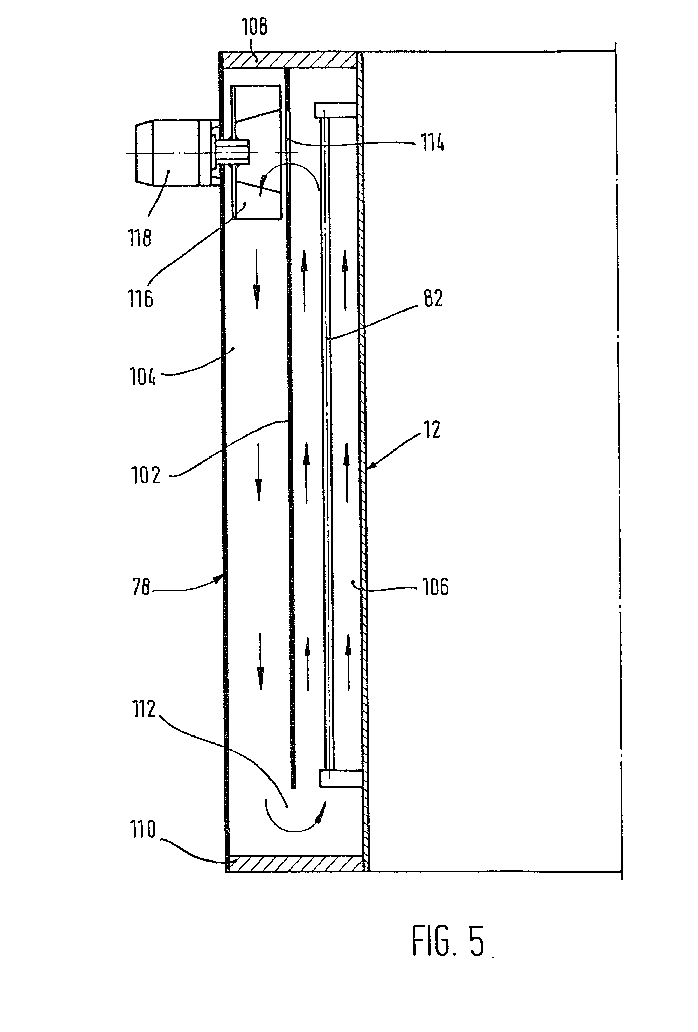

Fig. 5 zeigt in vergrößerter Darstellung eine Variante der in Fig. 3 dargestellten Heizvorrichtung für den Außenmantel 12. Der Raum innerhalb des den Außenmantel umgebenden Heizmantels 78 ist durch eine koaxial zu Außenmantel 12 und Heizmantel 78 verlaufende zylindrische Zwischenwand 102 in einen äußeren Teilraum 104 und in einen inneren Teilraum 106 unterteilt, der die Heizstäbe 82 enthält. Die Zwischenwand 102 erstreckt sich von der oberen Begrenzung 108 des Heizmantels 78 bis in die Nähe der unteren Begrenzung 110 des Heizmantels 78, so daß zwischen dem unteren Rand der Zwischenwand 102 und der unteren Begrenzung 110 des Heizmantels 78 ein Zwischenraum 112 verbleibt. Die Zwischenwand 102 könnte sich auch bis zur unteren Begrenzung 110 erstrecken, wobei dann entsprechende Durchbrechungen vorgesehen sind.

Auf Höhe des oberen Endes der Heizstäbe 82 ist in der Zwischenwand 102 eine Durchbrechung 114 vorgesehen. Auf Höhe dieser Durchbrechung 114 befindet sich in dem äußeren Teilraum 104 ein Gebläse 116, das von einem an der Außenseite des Heizmantels 78 befestigten Motor 118 angetrieben wird. Das Gebläse 116 saugt Luft aus dem inneren Teilraum 106 durch die Durchbrechung 114 an und fördert die Luft durch den äußeren Teilraum 104 abwärts zu dem Zwischenraum 112, durch den sie wiederum in den inneren Teilraum 106 gelangt, so daß sich eine Luftzirkulation in Richtung der eingezeichneten Pfeile ergibt. Es können selbstverständlich eine Mehrzahl derartiger Gebläse 116 über den Umfang des Heizmantels 78 verteilt sein.

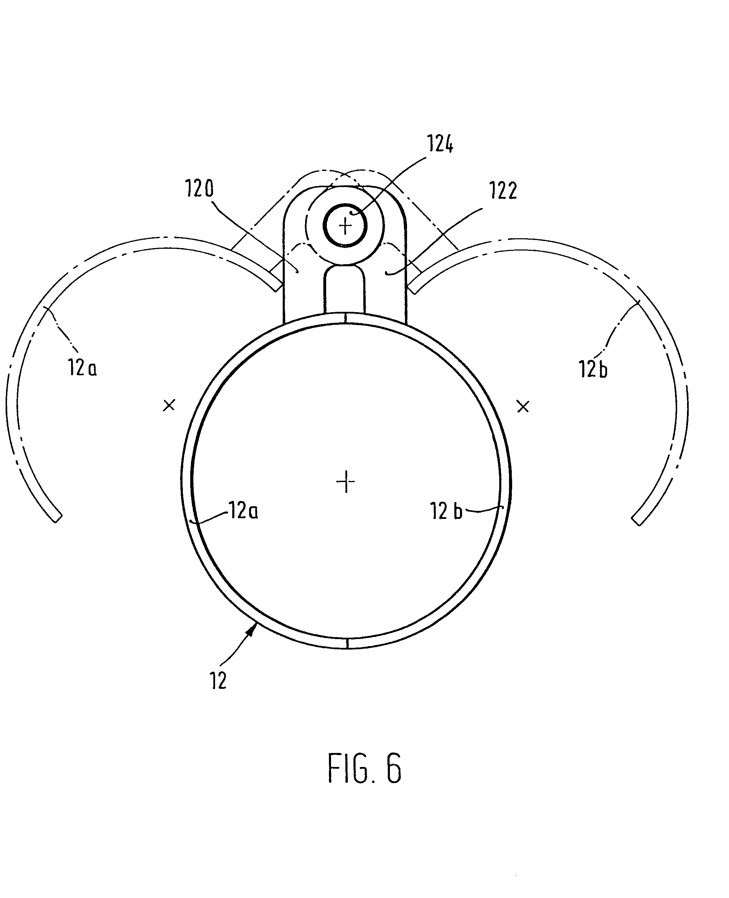

Die Fig. 6 zeigt eine besonders bevorzugte Ausführungsform des Außenmantels. Der in Fig. 6 dargestellte zylindrische Außenmantel 12 besteht aus zwei Halbschalen 12a und 12b, die über Schwenkträger 120 bzw. 122 an einer vertikalen Säule 124 derart schwenkbar gelagert sind, daß sie zwischen der in der Fig. 6 durch ausgezogene Linien wiedergegebenen geschlossenen Stellung und der durch strichpunktierte Linien wiedergegebenen geöffneten Stellung verschwenkbar sind. Die Säule 124 kann beispielsweise das in der

Fig. 3 dargestellte Gestell 58 bilden und einen horizontalen Arm an ihrem oberen Ende aufweisen, an dem dann die innerhalb des Außenmantels angeordneten Teile befestigt bzw. gelagert sind. Diese Ausbildung des Außenmantels erlaubt eine besonders bequeme Reinigung des Ringraumes. Die Halbschalen 12a und 12b des Außenmantels 12 können ggf. auch mit entsprechend aufgeteilten Halbschalen des Auslauftrichters 18 verbunden sein. Es versteht sich ferner, daß der Heizmantel 78 mit den in ihm enthaltenen Heizstäben ebenfalls so unterteilt ist, daß die beiden Halbschalen 12a und 12b auseinandergeklappt werden können.

Fig. 7 schließlich zeigt noch eine spezielle Art der Zuführung des Kunststoffmaterials zum Ringraum, wobei der Außenmantel 12 mit dem Heizmantel 78 sowie der Innenkörper 14 nur schematisch angedeutet sind. In das obere Ende des Außenmantels 12 ragt ein Zuflaufrohr 126 hinein, das an seinem unteren Ende einen horizontal umgebogenen Endabschnitt 128 mit einer Auslauföffnung 130 aufweist. Der Endabschnitt 128 ist dabei im wesentlichen tangential zur Umlaufrichtung des Kunststoffmaterials im Ringraum gerichtet und weist mit seiner Auslauföffnung 130 in die der Drehrichtung entgegengesetzte Richtung. Wenn der Ringraum 26 mit Material gefüllt ist, wie dies durch die gewellte Linie 132 in Fig. 7 angedeutet ist, staut sich Material vor der Auslauföffnung 130 (siehe Fig. 7) und verhindert die weitere Zufuhr von Material aus dem nicht dargestellten Vorratsbehälter in den Ringraum 26. Wenn der Materialspiegel 132 in dem Ringraum 26 sinkt, wird die Auslauföffnung 130 wieder freigegeben, so daß neues Material nachströmen kann. Dadurch wird auf einfachste Weise eine Zulaufsteuerung erreicht.

P a t e n t a n s p r ü c h e

1. Beschickungsvorrichtung zum Vorwärmen und Zuführen von pulverförmigem oder körnigem thermoplastischem Kunststoffmaterial zu einer Kunststoffverarbeitungsmaschine, umfassend einen Durchlaufbehälter mit einer an einen Vorratsbehälter für das Kunststoffmaterial anschließbaren Einlaßöffnung und einer an die Kunststoffverarbeitungsmaschine anschließbaren Auslaßöffnung und eine Heizeinrichtung zur Erwärmung des durchlaufenden Kunststoffmaterials, dadurch gekennzeichnet, daß der Durchlaufbehälter (10) einen an seinem einen Ende mit einem Auslauftrichter (18, 22) verbundenen Außenmantel (12) und einen Innenkörper (14) umfaßt, der innerhalb des Außenmantels (12) unter Bildung eines mit der Einlaßöffnung (20) und der Auslaßöffnung (22) in Verbindung stehenden Ringraumes (26) zwischen Außenmantel (12) und Innenkörper (15) angeordnet ist, wobei die Anordnung so getroffen ist, daß das Kunststoffmaterial den Ringraum (26) unter der Wirkung der Schwerkraft durchläuft, und das die Heizeinrichtung (34, 36) in dem Innenkörper (14) und/oder an der Außenseite des Außenmantels (12) angeordnet ist.

2. Beschickungsvorrichtung nach Anspruch 1, dadurch gekennzeichnet, daß der Ringraum (26) auf mindestens einer Seite von einer Fläche begrenzt ist, deren Querschnitt quer zur Durchlaufrichtung die Form eines Vieleckes hat.

3. Beschickungsvorrichtung nach Anspruch 1, dadurch gekennzeichnet, daß der Ringraum (26) auf mindestens einer Seite von einer Fläche begrenzt ist, deren Querschnitt quer zur Durchlaufrichtung die Form einer kontinuierlich gekrümmten geschlossenen Kurve hat.

4. Beschickungsvorrichtung nach Anspruch 3, dadurch gekennzeichnet, daß die gekrümmte geschlossene Kurve ein Kreis ist.

5. Beschickungsvorrichtung nach Anspruch 4, dadurch gekennzeichnet, daß der Außenmantel (12) und/oder der Innenkörper (14) im wesentlichen zylindrisch ausgebildet sind.

6. Beschickungsvorrichtung nach einem der Ansprüche 1 bis 5, dadurch gekennzeichnet, daß der Außenmantel (12) aus mindestens zwei sich jeweils über einen Teil des Umfangs erstreckenden, lösbar miteinander verbundenen Schalen (12a, 12b) besteht.

7. Beschickungsvorrichtung nach Anspruch 6, dadurch gekennzeichnet, daß die Schalen (12a, 12b) um eine im wesentlichen parallel zu einer Mantellinie verlaufende Achse (124) schwenkbar angeordnet sind.

8. Beschickungsvorrichtung nach einem der Ansprüche 1 bis 7, dadurch gekennzeichnet, daß der Innenkörper (14) koaxial innerhalb des Außenmantels (12) angeordnet ist.

9. Beschickungsvorrichtung nach einem der Ansprüche 1 bis 7, dadurch gekennzeichnet, daß der Innenkörper (14) exzentrisch zum Außenmantel (12) angeordnet ist.

10. Beschickungsvorrichtung nach Anspruch 8, dadurch gekennzeichnet, daß der Innenkörper (14) in dem Außenmantel (12) unbeweglich angeordnet ist und daß die Einlaßöffnung (20) konzentrisch zur Ringraumachse (46) liegt.

11. Beschickungsvorrichtung nach einem der Ansprüche 1 bis 9, dadurch gekennzeichnet, daß der Innenkörper (14) und der Außenmantel (12) relativ zueinander drehbar sind.

12. Beschickungsvorrichtung nach Anspruch 11, dadurch gekennzeichnet, daß der Innenkörper (14) in dem ortsfest gehaltenen Außenmantel (12) drehbar gelagert ist.

13. Beschickungsvorrichtung nach Anspruch 12, dadurch gekennzeichnet, daß der Innenkörper (14) an seinem oberen Ende einen axial verlaufenden Lagerfortsatz (52) aufweist, an dem eine Antriebseinrichtung für den Innenkörper (14) angreift.

14. Beschickungsvorrichtung nach einem der Ansprüche 1 bis 13, dadurch gekennzeichnet, daß zwischen dem Innenkörper (14) und dem Außenmantel (12) im wesentlichen koaxial zu diesen ein Rührflügel (70) angeordnet ist, der eine Mehrzahl von in den Ringraum (26) eingreifenden Flügelelementen (74) aufweist.

15. Beschickungsvorrichtung nach Anspruch 14, dadurch gekennzeichnet, daß die Flügelelemente an einem im wesentlichen koaxial zur Ringraumachse (46) angeordneten Trägerring (72) angeordnet sind und sich im wesentlichen achsparallel mit Abstand von Außenmantel (12) und Innenkörper (14) durch den Ringraum (26) erstrecken.

16. Beschickungsvorrichtung nach Anspruch 14 oder 15, dadurch gekennzeichnet, daß die Flügelelemente (74) von Flachprofilen mit im wesentlichen rechteckförmigem Querschnitt gebildet sind, die mit ihrer Querschnittslängsseite im wesentlichen radial ausgerichtet sind.

17. Beschickungsvorrichtung nach einem der Ansprüche 14 bis 16, dadurch gekennzeichnet, daß der Rührflügel (70) gegenüber dem Innenkörper (14) und dem Außenmantel (12) frei drehbar gelagert ist.

18. Beschickungsvorrichtung nach einem der Ansprüche 1 bis 17, dadurch gekennzeichnet, daß im Auslaufstutzen (22) des Auslauftrichters (18) eine Dosiereinrichtung (44) angeordnet ist.

19. Beschickungsvorrichtung nach Anspruch 18, dadurch gekennzeichnet, daß die Dosiereinrichtung von einem Zellenrad (54) gebildet ist.

20. Beschickungsvorrichtung nach einem der Ansprüche 1 bis 19, dadurch gekennzeichnet, daß die Einlaßöffnung (20) des Ringraumes (26) mit dem Vorratsbehälter über ein Zulaufrohr (126) in Verbindung steht, dessen Auslaufende (128) im wesentlichen horizontal umgebogen ist, tangential zum Ringraum (26) verläuft und mit der Auslauföffnung (130) in die der Materialdrehrichtung entgegengesetzte Richtung weist.

21. Beschickungsvorrichtung nach einem der Ansprüche 1 bis 20, dadurch gekennzeichnet, daß die Heizvorrichtung in eine Mehrzahl getrennt steuerbarer Zonen aufgeteilt ist.

22. Beschickungsvorrichtung nach einem der Ansprüche 1 bis 21, dadurch gekennzeichnet, daß die Heizvorrichtung von einer Mikrowellenheizung gebildet ist.

23. Beschickungsvorrichtung nach einem der Ansprüche 1 bis 21, dadurch gekennzeichnet, daß die Heizvorrichtung (36) einen den Außenmantel (12) umschließenden Heizmantel (78) umfaßt, in dem elektrische Heizelemente (82) angeordnet sind.

24. Beschickungsvorrichtung nach Anspruch 23, dadurch gekennzeichnet, daß in dem Heizmantel (78) eine Vorrichtung zum Umwälzen der eingeschlossenen Luft, vorzugsweise mindestens ein Ventilator (116) angeordnet ist.

25. Beschickungsvorrichtung nach einem der Ansprüche 1 bis 21, 23 und 24, dadurch gekennzeichnet, daß die Heizvorrichtung (34) innerhalb des hohlen Innenkörpers (14) angeordnete elektrische Heizelemente (86) umfaßt.

26. Beschickungsvorrichtung nach einem der Ansprüche 23 bis 25, dadurch gekennzeichnet, daß die Heizelemente (82, 86) von im wesentlichen achsparallel verlaufenden, über den Umfang der zu beheizenden Fläche verteilten Heizstäben gebildet sind.

27. Beschickungsvorrichtung nach Anspruch 25 oder 26, dadurch gekennzeichnet, daß die innerhalb des Innenkörpers (14) liegenden Heizelemente (86) an einem Träger (88) angeordnet sind, der über ein axial durch den hohlen Lagerfortsatz (52) des Innenkörpers (14) hindurchgeführtes Verbindungselement (90) mit einer ortsfesten
Halterung (58) verbunden ist.

28. Beschickungsvorrichtung nach einem der Ansprüche 25
bis 27, dadurch gekennzeichnet, daß in dem Innenkörper
(14) eine Vorrichtung zum Umwälzen der eingeschlossenen
Luft, vorzugsweise mindestens ein Ventilator (94) angeordnet ist.

29. Beschickungsvorrichtung nach Anspruch 28, dadurch gekennzeichnet, daß der Ventilator (94) über eine in dem
Lagerfortsatz (52) drehbar gelagerte und aus dieser
herausragende Antriebswelle (96) antreibbar ist.

30. Beschickungsvorrichtung nach einem der Ansprüche 1 bis
29, dadurch gekennzeichnet, daß die den Ringraum (26)
begrenzenden Wände auf ihrer dem Ringraum (26) zugekehrten Seite eine glatte Oberfläche besitzen.

31. Beschickungsvorrichtung nach einem der Ansprüche 1 bis
29, dadurch gekennzeichnet, daß mindestens eine der den
Ringraum (26) begrenzenden Wände auf ihrer dem Ringraum
(26) zugekehrten Seite eine strukturierte Oberfläche
besitzt.

32. Beschickungsvorrichtung nach Anspruch 31, dadurch gekennzeichnet, daß die strukturierte Oberfläche Rillen oder
Noppen aufweist.

FIG. 1

FIG. 2

FIG. 3

0025860

0025860

FIG. 7

FIG. 4

FIG. 5

FIG. 6

## EUROPÄISCHER RECHERCHENBERICHT

Europäisches Patentamt

### EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | AT - B - 232 707 (DRABERT SÖHNE) <br> * Seite 1, Zeilen 31 bis 33; Fig. 1 * <br> -- | 1,3-5, 8 |
| | DE - A1 - 2 437 592 (YUGEN-KAISHA IDEA <br> RESEARCH et al.) <br> * Fig. 3 * <br> -- | 9,11, 12 |
| | DE - A1 - 2 520 727 (WACKER-CHEMIE GMBH) <br> * Seite 6, Zeilen 17 bis 19 * <br> -- | 11,31, 32 |
| D,A | AT - B - 339 583 (KRAUSS MAFFEI AUSTRIA <br> GMBH) <br> * Anspruch 1 * <br> -- | |
| A | DE - A - 2 001 739 (DRAISWERKE GMBH) <br> * Fig. 1 * <br> ---- | |

**KLASSIFIKATION DER ANMELDUNG (Int. Cl.³)**

B 29 B  3/00

B 29 B  5/00

**RECHERCHIERTE SACHGEBIETE (Int. Cl.³)**

B 29 B  1/00

B 29 B  3/00

B 29 B  5/00

B 29 F  1/00

B 29 F  3/00

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| Berlin | 17-12-1980 | BITTNER |

EPA form 1503.1  06.78